# EUROPÄISCHE PATENTSCHRIFT

(11) **EP 4 558 783 B1**
(45) Veröffentlichungstag und Bekanntmachung des Hinweises auf die Patenterteilung: **03.06.2026**
(21) Anmeldenummer: 23739300.4
(22) Anmeldetag: 12.07.2023
(51) Int. Cl.: G01B 3/14, G01B 3/34, G01B 3/56, G01B 5/08, B66B 5/00, B66B 7/12

(54) **EINRICHTUNG ZUR BESTIMMUNG VON PARAMETERN EINES DRAHTSEILS UND/ODER EINES DAS DRAHTSEIL FÜHRENDEN DRAHTSEILFÜRUNGSMITTELS, INSBESONDERE ZUR BESTIMMUNG VON VERSCHLEISSPARAMETERN UND/ODER GEOMETRISCHEN PARAMETERN**
DEVICE FOR DETERMINING PARAMETERS OF A WIRE ROPE AND/OR A WIRE ROPE GUIDE MEANS GUIDING THE WIRE ROPE, IN PARTICULAR FOR DETERMINING WEAR PARAMETERS AND/OR GEOMETRIC PARAMETERS
DISPOSITIF POUR DÉTERMINER DES PARAMÈTRES D'UN CÂBLE MÉTALLIQUE ET/OU D'UN MOYEN DE GUIDAGE DE CÂBLE MÉTALLIQUE GUIDANT LE CÂBLE MÉTALLIQUE, EN PARTICULIER POUR DÉTERMINER DES PARAMÈTRES D'USURE ET/OU DES PARAMÈTRES GÉOMÉTRIQUES

(30) Priorität: 18.07.2022 LU 502517
(43) Veröffentlichungstag der Anmeldung: 28.05.2025
(73) Patentinhaber: VEROPE AG, 6300 Zug (CH)
(72) Erfinder: VERREET, Pierre, 6300 Zug (CH); MARX, Tobias, 67661 Kaiserslautern (DE); ZIPP, Lukas, 66957 Kröppen (DE)
(74) Vertreter: Zeiner, Johannes Michael
(86) Internationale Anmeldenummer: PCT/EP2023/069289
(87) Internationale Veröffentlichungsnummer: WO 2024/017726

(56) Entgegenhaltungen:
- DE-A1- 19 538 371
- US-A1- 2008 276 475
- US-A1- 2022 074 726
- ROLAND VERREET: "Stahldrahtseile für Krane", 1 January 2004 (2004-01-01), Internet Article, XP055269147, Retrieved from the Internet <URL:http://www.casar.de/De/Technik2/Broschuren> [retrieved on 20160428]

## Beschreibung

Die Erfindung betrifft eine Einrichtung zur Bestimmung von Parametern eines Drahtseils und/oder eines das Drahtseil führenden Drahtseilführungsmittels, insbesondere zur Bestimmung von Verschleißparametern und/oder geometrischen Parametern, wobei die Einrichtung zumindest zwei miteinander verbundene Schenkel umfasst, wobei zumindest einer der zumindest zwei Schenkel mindestens zwei kreisbogenförmige Ausschnitte aufweist, die zur Bestimmung der Parameter des Drahtseils eingerichtet sind, wobei der Durchmesser des ersten Ausschnitts dem nominalen Durchmesser eines nicht verschlissenen Drahtseils entspricht und der Durchmesser des zweiten Ausschnitts dem Durchmesser eines aus der ISO 4309 (Stand: 11/2017) entnommenen zu einem bestimmten Grad ablegereifen Drahtseils entspricht, wobei jeder kreisbogenförmige Ausschnitt mit einer entsprechenden aufgebrachten Erklärung versehen ist, wodurch ein Rückschluss auf einen Verschleißzustand des Drahtseils möglich ist.

Ein Drahtseil ist aus dem Stand der Technik beispielsweise aus Aufzügen oder von Kränen bekannt. Üblicherweise wird ein Drahtseil bei Verwendung in einem Aufzug oder einem Kran durch mindestens eine Seilscheibe umgelenkt oder auf eine Seiltrommel auf- und abgewickelt. Die Seilscheibe und die Seiltrommel sind auf eine Größe des Drahtseils, insbesondere dessen Durchmesser, angepasst.

Verschleißparamter bei Drahtseilen sind insbesondere Veränderungen eines Seilquerschnitts, insbesondere eines Seildurchmessers, oder Veränderungen von dessen Seiloberläche, aus der beispielsweise gebrochene, das Drahtseil bildende Drähte vorstehen können.

Verschleißparameter bei Seilführungsmitteln wie Seilscheiben oder Seiltrommeln können geometrische Veränderungen der Trommel oder der Seilscheibe in denjenigen Bereichen sein, in denen Kontakt zu dem zu führenden Drahtseil besteht. Ist beispielsweise eine Seilscheibe verschlissen, würde ein darin geführtes Drahtseil in einer zu engen Seilscheibenrille geführt und somit in Umfangsrichtung gequetscht werden, so dass ein erhöhter Verschleiß gegenüber einer nicht oder weniger verschlissenen Seilscheibe auftritt.

Weitere Parameter eines Drahtseils können dessen nomineller Durchmesser d₀ sein. Es versteht sich, dass der tatsächliche Durchmesser eines neuen, unbenutzten Seils aufgrund technischer Fertigungstoleranzen vom nominellen Durchmesser d₀ abweichen kann. Beispielsweise ist für ein Drahtseil mit einem nominellen Durchmesser d₀ von mehr als 8 mm eine Toleranz zwischen 0% und +5% bezogen auf den nominellen Durchmesser d₀ noch normgerecht (s. Norm DIN EN 12385-4; Stand: Juni 2008).

Aus dem Stand der Technik sind Einrichtungen zur Bestimmung von Drahtseilparametern bekannt, beispielsweise aus der DE 20 2015 101 747 U1 oder der DE 601 17 410 T2.

Aus US 2022/0074726 A1, US 2007/0276475 A1 und DE 195 38 371 A1 sind Messeinrichtungen bekannt.

Es bestehen Normen, mit denen ein Verschleißzustand eines Drahtseils anhand von Drahtseilparametern ermittelbar ist. Aus diesen Drahtseilparametern kann abgeleitet werden, ob bzw. wann das Drahtseil ablegereif bzw. zu einem bestimmten Grad ablegereif ist.

Beispielsweise befasst sich die ISO 16625 ("Cranes and hoists - Selection of wire ropes, drum and sheaves"; Stand: Juli 2013) mit Trommel- und Seilscheibenrillen und definiert einen Bereich, innerhalb dessen eine Rillentiefe bzw. ein Rillendurchmesser liegen sollte.

Die ISO 16625 befasst sich außerdem mit einem Öffnungswinkel einer Seilscheibe, der eingehalten werden sollte, um eine für ein von der Seilscheibe geführtes Drahtseil verdrehungsarm über die Seilscheibe zu führen.

Eine Winkelabweichung von einem geraden Einlauf des Drahtseils in die Seilscheibe, das heißt einem Einlauf parallel zur Drahtseillängsrichtung, wird durch den sogenannten Ablenkwinkel beschrieben. Bei großen Ablenkwinkeln kann das Seil um seine Längsachse von Seilscheibenflanken in eine Seilscheibenrille hineinrollen, wodurch eine unerwünschte, das Drahtseil verschleißende Verdrehung bewirkt wird. Einer solchen Verdrehung kann beispielsweise durch einen großen Öffnungswinkel der Seilscheibe entgegengewirkt werden.

Je größer der Öffnungswinkel ist, desto verdrehärmer kann das Drahtseil bei Benutzung mit der Seilscheibe geführt werden.

Weitere relevante Normen, aus denen Drahtseilparameter entnehmbar sind, die eine Ableitung eines Verschleißzustands erlauben, sind die DIN 15061-1 ("Rillenprofile für Seilrollen"; Stand: August 1977) sowie die DIN 15061-2 ("Rillenprofile für Seiltrommeln", Stand: August 1977).

Aus der DIN ISO 4309 ("Krane - Drahtseile - Wartung und Instandhaltung, Inspektion und Ablage", Stand: August 2021) und der ISO 4309 (Stand: November 2017) sind Durchmesserveränderungen für verschieden Seiltypen bekannt, anhand derer ein Verschleißzustand, beispielsweise die Ablegereife, ermittelbar ist. Auch befasst sich genannte Normen mit der Bestimmung der Ablegereife eines Drahtseils anhand einer Anzahl gebrochener das Drahtseil bildender Drähte. Werden beispielsweise auf einer Referenzlänge des Drahtseils, die dem Sechsfachen des nominellen Durchmesser d₀ des Drahtseils entspricht, mehr Drahtbrüche festgestellt als gemäß Norm ISO 4309 bzw. DIN ISO 4309 noch zulässig sind, ist das Seil zu 100 % ablegereif und muss unverzüglich getauscht werden, um ein Versagen bei dessen weiterer Benutzung sicher auszuschließen.

Weitere relevante Normen, der mit einer erfindungsgemäßen Einrichtung bestimmbare Verschleißparameter und/oder geometrische Parameter entnehmbar sind, sind die DIN EN 14492-2 (Stand: September 2019), die ASME B30.30 (Stand: 2019), die DIN 15020-1 (Stand: Februar 1974), die DIN 13001-3-2 (Stand: Oktober 2015), die DIN EN 12385-1 (Stand: Januar 2009), die DIN EN 12385-5 (Stand: Januar 2022), die DIN EN 12385-6 (Stand: Mai 2004), die BS 6570 (Stand: 86th 1978), die AS 2759 (Stand: 2004), die MDG 33.1 (Stand: 2011) und die SABS 0294 (Stand: 2020).

Werden an einem Drahtseil oder einem dieses Drahtseil führenden Drahtseilführungsmittel aus den vorgenannten Normen bekannte Drahtseil- oder Drahtseilführungsmittelparameter bestimmt, ist vorteilhaft eine Ermittlung eines Verschleißzustands des Drahtseils oder des Drahtseilführungsmittels möglich.

Wird beispielsweise ermittelt, dass ein Durchmesser des Drahtseils soweit verringert ist, dass ein genormter Grenzwert für den Drahtseildurchmesser, der eine Aussage über einen Verschleißzustand wie die Ablegereife erlaubt, unterschritten wird, muss das Drahtseil gegen ein neues ausgetauscht werden.

Der Erfindung liegt die Aufgabe zugrunde, eine Einrichtung zur Bestimmung von Parametern eines Drahtseils und/oder eines das Drahtseil führenden Drahtseilführungsmittels zu schaffen, durch die relevante genormte geometrische Parameter bestimmbar sind, die einen Hinweis auf einen Verschleißzustand des Drahtseils und/oder des das Drahtseil führenden Drahtseilführungsmittels geben, und die einem Benutzer der Einrichtung den Verschleißzustand auf einfache Art und Weise anzeigen kann.

Erfindungsgemäß wird die Aufgabe durch die Merkmale von Anspruch 1 gelöst.

Dadurch, dass zumindest zwei miteinander verbundene Schenkel vorgesehen sind, wird eine Einrichtung geschaffen, die zur Bestimmung mehrerer relevanter Drahtseilparameter geeignet ist und einem Benutzer vorteilhaft eine einfache Bestimmung der Drahtseilparameter ermöglicht.

Für jede Kombination aus einem Drahtseil mit einem nominellen Durchmesser d₀ und einem zugehörigen Drahtseilführungsmittel, das vorzugsweise eine Seilscheibe oder Seiltrommel ist, ist eine eigene Einrichtung erforderlich, da insbesondere genormte Verschleißparameter und/oder geometrische Parameter des Drahtseils oder eines das Drahtseil führenden Drahtseilführungsmittels von einem nominellen Durchmessers d₀ des Drahtseils abhängig sind.

Die Schenkel sind insbesondere in der Art einer Lehre ausgebildet, durch die eine Aussage darüber möglich ist, ob sich Parameter innerhalb oder außerhalb von Intervallen der entsprechenden relevanten Norm befinden.

Es versteht sich, dass eine erfindungsgemäße Einrichtung ausschließlich mechanisch ausgebildet ist. Elektrische oder elektronische Komponenten sind nicht erforderlich.

Zweckmäßigerweise sind die zumindest zwei Schenkel einzeln oder gemeinsam zur Bestimmung der Parameter vorgesehen und verschwenkbar miteinander verbunden. Vorteilhaft wird eine besonders einfach zu bedienende Einrichtung ausgebildet. Jeder Schenkel kann für eine bestimmte, normgerechte Bestimmung von Drahtseilparametern oder Drahtseilführungsmittelparametern, insbesondere Verschleißparametern und/oder geometrischen Parametern, vorgesehen sein.

In einer Ausgestaltung der Erfindung sind die zumindest zwei Schenkel jeweils länglich ausgebildet und an einem Endabschnitt verschwenkbar miteinander verbunden. Vorteilhaft ist eine erfindungsgemäße Einrichtung besonders gut verstaubar, da die Schenkel in der Art eines Taschenmessers zusammengeklappt werden können. Die Endabschnitte, an denen die beiden Schenkel verschwenkbar miteinander verbunden sein können, können zur Bestimmung von Parametern des Drahtseils oder des Drahtseilführungsmittels eingerichtet sein.

Der mindestens eine Ausschnitt weist einen kreisbogenförmigen Abschnitt auf, wobei ein Durchmesser des kreisbogenförmigen Abschnitts einem Drahtseildurchmesser entspricht, bei dem das Drahtseil, dessen Parameter zu bestimmen sind, ablegereif ist.

Ablegereif bedeutet, dass das Drahtseil zu einem bestimmten, in Prozent ausgedrückten Grad ablegereif ist. Um einem Benutzer einer erfindungsgemäßen Einrichtung den Grad der Ablegereife anzuzeigen, der mit dem Ausschnitt bestimmbar ist, kann auf den Schenkel ein Hinweis aufgebracht sein, z. B. "100 % ablegereif" für einen Grad der Ablegereife von 100%. Aus Normen bekannt sind Grade der Ablegereife von 20% (slight), 40% (medium), 60 % (high), 80 % (very high) und 100% (discard) sowie dazugehörige Drahtseildurchmesser. Der Ausschnitt als solcher kann halbkreisförmig sein. Denkbar ist, dass der Ausschnitt seitlich in den ersten der zumindest zwei Schenkel eingebracht ist.

In der Norm ISO 4309 (Stand: November 2017) werden in Tabelle 5 verschiedenen Drahtseiltypen verschiedene Durchmesser bei bestimmten Verschleißzuständen eines Drahtseils zugeordnet. Beispielsweise ist ein drehungsarmes, benutztes Drahtseil bei einer Verringerung von dessen Durchmesser, der auch als aktueller oder gemessener Durchmesser bezeichnet wird, von mindestens 5% im Vergleich zu einem Durchmesser des Drahtseils bei dessen Benutzungsbeginn ablegereif, muss also ausgetauscht werden. Der Durchmesser des kreisbogenförmigen Abschnitts beträgt in diesem Beispiel das 0,95-fache des ursprünglichen Durchmessers des Drahtseiles, für dessen Parameterbestimmung die erfindungsgemäße Einrichtung vorgesehen ist, wobei für vorgenannte Erläuterung aus Gründen der Einfachheit angenommen wird, dass eine Fertigungstoleranz +/- 0 % beträgt.

Der Durchmesser des kreisbogenförmigen Abschnitts entspricht einem aus genannter Norm entnommenen Durchmesser, bei dem das Drahtseil einen bestimmten Grad der Ablegereife erreicht hat. Ein Seil, das einen Grad der Ablegereife von 100 % erreicht hat, sollte unverzüglich ausgetauscht werden, während ein Seil mit einem Grad der Ablegereife von beispielsweise 60 % weiterhin benutzbar ist.

Der mindestens eine Ausschnitt weist einen kreisbogenförmigen Abschnitt auf, wobei ein Durchmesser des kreisbogenförmigen Abschnitts einem ursprünglichen Durchmesser des Drahtseils entspricht.

Es versteht sich, dass der Durchmesser des kreisbogenförmigen Abschnitts einem nominellen Durchmesser d₀ entsprechen kann. In diesem Fall entspricht der ursprüngliche Drahtseildurchmesser dem nominellen Durchmesser d₀.

Denkbar ist, dass der Durchmesser des Ausschnitts dem nominellen Durchmesser d₀ zuzüglich einer technischen Fertigungstoleranz entspricht. Diese kann beispielsweise von einem Benutzer des Drahtseils vorgegeben werden oder im Bereich einer Abweichung vom nominellen Durchmesser d₀ zwischen 0% und +5% bezogen auf den nominellen Durchmesser d₀ liegen. In diesem Fall entspricht der ursprüngliche Seildurchmesser dem nominellen Durchmesser d₀ zuzüglich der Fertigungstoleranz.

Der Ausschnitt als solcher kann halbkreisförmig sein. Denkbar ist, dass der Ausschnitt seitlich in einen ersten der zumindest zwei Schenkel eingebracht ist.

Einer der zumindest zwei Schenkel weist zwei Ausschnitte mit jeweils einem kreisbogenförmigen Abschnitt auf, wobei ein Durchmesser eines kreisbogenförmigen Abschnitts eines ersten Ausschnitts einem ursprünglichen Durchmesser des Drahtseils entspricht und ein Durchmesser eines kreisbogenförmigen Abschnitts eines zweiten Ausschnitts einem Durchmesser, bei dem das Drahtseil ablegereif ist.

Insbesondere können die Ausschnitte auf gegenüberliegenden Seiten eines ersten der zumindest zwei Schenkel angeordnet sein. Denkbar ist, dass jeder der Ausschnitte halbkreisförmig ist. Vorteilhaft wird eine Einrichtung geschaffen, mit der besonders viele Parameter bestimmbar sind.

In der Norm DIN ISO 4309 aus 2021 werden in Tabelle 5 verschiedenen Seiltypen verschiedene Durchmesser bei bestimmten Verschleißzuständen eines Seils zugeordnet. Beispielsweise ist ein drehungsarmes, benutztes Drahtseil bei einer Verringerung von dessen Durchmesser, der auch als aktueller oder gemessener Durchmesser bezeichnet wird, von mindestens 5% im Vergleich zu einem Durchmesser des Drahtseils bei dessen Benutzungsbeginn ablegereif, muss also ausgetauscht werden. Während der erste kreisbogenförmige Abschnitt einen Durchmesser aufweist, der einem ursprünglichen Durchmesser des Drahtseils entspricht, den ein weiter benutzbares, lediglich gering oder gar nicht verschlissenes Drahtseil aufweist, weist der zweite Ausschnitt einen Durchmesser auf, der einem Drahtseildurchmesser entspricht, ab dem das Drahtseil zu einem bestimmten Grad ablegereif ist. Dieser Grad der Ablegereife wurde der vorgenannten Norm entnommenen.

Es versteht sich, dass andere Normen zur Festlegung der Größe des Ausschnitts herangezogen werden können, beispielsweise die eingangs genannten weiteren Normen.

Es versteht sich, dass der Durchmesser des ersten kreisbogenförmigen Abschnitts einem nominellen Durchmesser d₀ entsprechen kann. In diesem Fall entspricht der ursprüngliche Seildurchmesser dem nominellen Durchmesser d₀.

Denkbar ist, dass der Durchmesser des ersten Ausschnitts dem nominellen Durchmesser d₀ zuzüglich einer technischen Fertigungstoleranz entspricht. Diese kann beispielsweise von einem Benutzer des Drahtseils vorgegeben werden oder im Bereich einer Abweichung vom nominellen Durchmesser d₀ zwischen 0% und +5% bezogen auf den nominellen Durchmesser d₀ liegen. In diesem Fall entspricht der ursprüngliche Seildurchmesser dem nominellen Durchmesser d₀ zuzüglich der Fertigungstoleranz.

Zur Bestimmung der Ablegereife wird ein Drahtseil, dessen Parameter zu bestimmen sind, in den ersten Ausschnitt eingelegt. Passt das Drahtseil genau hinein, liegt keine Durchmesserveränderung vor, die Ablegereife begründen könnte.

Wird das Drahtseil in den zweiten Ausschnitt eingelegt und passt genau hinein, ist das Drahtseil verschlissen und je nach Größe des zweiten Ausschnitts zu 100% ablegereif oder lediglich zu 20%, 40%, 60% oder 80%. Die Werte für den Durchmesser des ersten und zweiten Ausschnitts finden sich beispielsweise in der einer Konstruktion einer erfindungsgemäßen Einrichtung zugrundeliegenden vorgenannten Norm DIN ISO 4309, sofern die Einrichtung gemäß Parametern der DIN ISO 4309 gefertigt ist.

Passt das Drahtseil beispielsweise nicht in den zweiten Ausschnitt hinein, ist dessen Durchmesser größer als der genormte Grenzwert für die Ablegereife. Folglich kann das Drahtseil weiter sicher benutzt werden.

In einer Ausgestaltung der Erfindung weist einer der zumindest zwei Schenkel einen Endabschnitt mit einer Markierung auf, wobei der Endabschnitt zur Bestimmung einer Tiefe des Drahtseilführungsmittels, vorzugsweise zur Bestimmung einer Seilscheibentiefe oder einer Seiltrommeltiefe, eingerichtet ist. Die Markierung kann beispielsweise als Einkerbung, insbesondere seitliche Einkerbung, in den Schenkel eingebracht sein.

Anstatt einer Einkerbung ist ein Aufdruck auf den Schenkel denkbar.

Zur Tiefenbestimmung kann der Endabschnitt des Schenkels eine Rundung, die zur Anlage an eine Rille einer Seilscheibe oder Seiltrommel eingerichtet ist, sowie eine seitliche Einkerbung aufweisen.

Der abgerundete Endabschnitt ist geometrisch derart ausgebildet, dass er zur Tiefenbestimmung in der Art einer Lehre an das Drahtseilführungsmittel anlegbar ist. Die seitliche Einkerbung ist ein Anzeigemittel und kann beispielsweise die gemäß Norm (DIN 15061-1 und -2; Stand: August 1977) erforderliche Tiefe anzeigen. Vorteilhaft ist für einen Benutzer auf einfache Art und Weise erkennbar, dass die Mindestrillentiefe unterschritten wurde und das Drahtseilführungsmittel ausgetauscht werden muss.

Ist das Drahtseilführungsmittel stark verschlissen, kann beispielsweise zwischen dem Endabschnitt, der konvex ausgebildet sein kann, und dem Drahtseilführungsmittel ein sichtbarer Spalt ausgebildet werden.

Zweckmäßigerweise weist einer der zumindest zwei Schenkel einen halbkreisförmigen Endabschnitt auf, wobei ein Durchmesser des halbkreisförmigen Endabschnitts einem Rillendurchmesser eines Drahtseilführungsmittels entspricht, wobei der Rillendurchmesser des Drahtseilführungsmittels dem 1,04-fachen bis 1,11-fachen eines nominellen Durchmesser d₀ eines Drahtseils, das über das Drahtseilführungsmittel geführt wird, entspricht.

Normgemäß, beispielsweise nach ISO 16625 (Stand: Juli 2013), sind für Seilscheiben und Seiltrommeln Grenzwerte vorgegeben, anhand derer festgelegt ist, ab wann eine Seilscheibe oder Seiltrommel als Drahtseilführungsmittel nicht mehr verwendet werden sollte.

Der halbkreisförmige Endabschnitts ist zur Anlage in eine Rille eines Drahtseilführungsmittels vorgesehen und ist für den jeweiligen Drahtseildurchmesser, den das Drahtseilführungsmittel führt, gemäß vorgenannter ISO 16625 ausgebildet.

Denkbar ist, dass jeder der zumindest zwei Schenkel einen halbkreisförmigen Endabschnitt aufweist, der zur Ermittlung zweier verschiedener Grenzwerte für einen Rillendurchmesser eingerichtet ist.

In einer Ausgestaltung der Erfindung weist zumindest einer der zwei Schenkel ein mehrere Markierungen umfassendes Anzeigemittel auf, durch das ein zwischen den beiden Schenkel gebildeter Winkel, der zur Bestimmung eines Öffnungswinkel des Drahtseilführungsmittels eingerichtet ist, anzeigbar ist.

Es können in einen ersten der zumindest zwei Schenkel drei seitlicheEinkerbungen eingebracht sein, die beispielsweise einen Winkel zwischen den zwei Schenkeln von 30°, 45° oder 60° anzeigen.

Anstatt einer Einkerbung ist ein Aufdruck auf den Schenkel denkbar.

Normgemäß, beispielsweise gemäß ISO 16625 (Stand: Juli 2013) und DIN EN 13135, ist ein Öffnungswinkel von Seilscheiben an Seilscheibenflanken zu messen. Durch eine längliche Ausbildung der verschwenkbar miteinander verbundenen Schenkel können diese zur Bestimmung des Öffnungswinkel an die Seilscheibenflanken angelegt werden. An den Markierungen kann dann abgelesen werden, ob der Öffnungswinkel normgemäß ist.

In einer weiteren Ausgestaltung der Erfindung ist der mindestens eine Ausschnitt kreisbogenförmig, insbesondere halbkreisförmig, ausgebildet, und in einen Endabschnitt eines ersten der zumindest zwei Schenkel eingebracht,wobei der Endabschnitt dazu eingerichtet ist, das Drahtseil während einer Bewegung in einer Drahtseillängsrichtung in Umfangsrichtung zumindest teilweise zu umgreifen.

Durch das teilweise Umgreifen, vorzugsweise ohne Spaltbildung zwischen dem Ausschnitt und dem Drahtseil, kann ein Drahtbruch, der als von einer Drahtseiloberfläche vorstehender Vorsprung auftritt, festgestellt werden, da bei einer Bewegung des Schenkel in Seillängsrichtung der Endabschnitt an dem Vorsprung hängenbleibt.

Vorteilhaft ist eine eine Anzahl an gebrochenen Drähten in dem Drahtseil auf einfache Art und Weise bestimmbar.

Zweckmäßigerweise ist ein Anzeigemittel vorgesehen, das zwei voneinander beabstandete Markierungen umfasst, deren Abstand einem Sechsfachen eines nominellen Durchmessers d₀ des Drahtseils, dessen Parameter zu bestimmen sind, entspricht.

Die maximale Anzahl von Drahtbrüchen bei einem Drahtseil, die zur Ablegereife führt, ist beispielsweise in der Norm DIN ISO 4309 festgelegt. Dazu werden auf einer Drahtseiloberfläche über eine Referenzlänge, die dem Sechsfachen des nominellen Seildurchmessers entspricht, gebrochene Drähte gezählt.

Das weitere Anzeigemittel kann beispielsweise zwei seitliche Einkerbungen umfassen, von denen eine erste in einen ersten der zumindest zwei Schenkel und eine zweite in einen zweiten der zumindest zwei Schenkel eingebracht ist. Damit die Referenzlänge bestimmt werden kann, sind die zwei Schenkel in eine Stellung zu verschwenken, in der deren Längsachsen koaxial sind.

Denkbar ist, dass das weitere Anzeigemittel beispielsweise zwei seitliche Einkerbungen aufweist, die in einen einzigen der zumindest zwei Schenkel eingebracht sind.

Es versteht sich, dass anders ausgebildete Markierungen denkbar sind. Anstatt einer Einkerbung ist ein Aufdruck auf den oder die Schenkel denkbar.

In einer Ausgestaltung der Erfindung umfasst die Einrichtung drei Schenkel. Eine Einrichtung mit drei Schenkel hat sich als besonders vorteilhaft herausgestellt, um sämtliche relevante Parameter, insbesondere Verschleißparameter, einer Kombination aus einem Drahtseil und einem das Drahtseil führenden Drahtseilführungsmittel zu bestimmen. Eine besonders kompakte Einrichtung wird geschaffen.

In einer weiteren Ausgestaltung der Erfindung sind die zumindest zwei Schenkel aus Kunststoff oder Metall gebildet.

Aus Metall gebildete Schenkel sind besonders stabil und haltbar, während aus Kunststoff gebildete Schenkel besonders leicht sind.

Zweckmäßigerweise ist jeder der zumindest zwei Schenkel zur Bestimmung von mehreren verschiedenen Parametern des Drahtseils und/oder des das Drahtseil führenden Drahtseilführungsmittels eingerichtet. Vorteilhaft wird eine besonders kompakte Einrichtung in der Art einer Lehre geschaffen, mit dem sämtliche Parameter, insbesondere Verschleißparameter, auf einfache Art und Weise bestimmbar sind. Weitere Hilfs- oder Messmittel sind nicht erforderlich.

Die Erfindung wird nachfolgend anhand von Ausführungsbeispielen und der beigefügten, sich auf die Ausführungsbeispiele beziehenden Zeichnungen näher erläutert. Es zeigen:
- Fig. 1: Eine Ausführungsform einer erfindungsgemäßen Einrichtung in mehreren verschiedenen Schenkelstellungen zur Bestimmung von normgerechten Drahtseilsowie Drahtseilführungsmittelparametern,
- Fig. 2: eine weitere Ausführungsform einer erfindungsgemäßen Einrichtung mit drei Schenkeln.

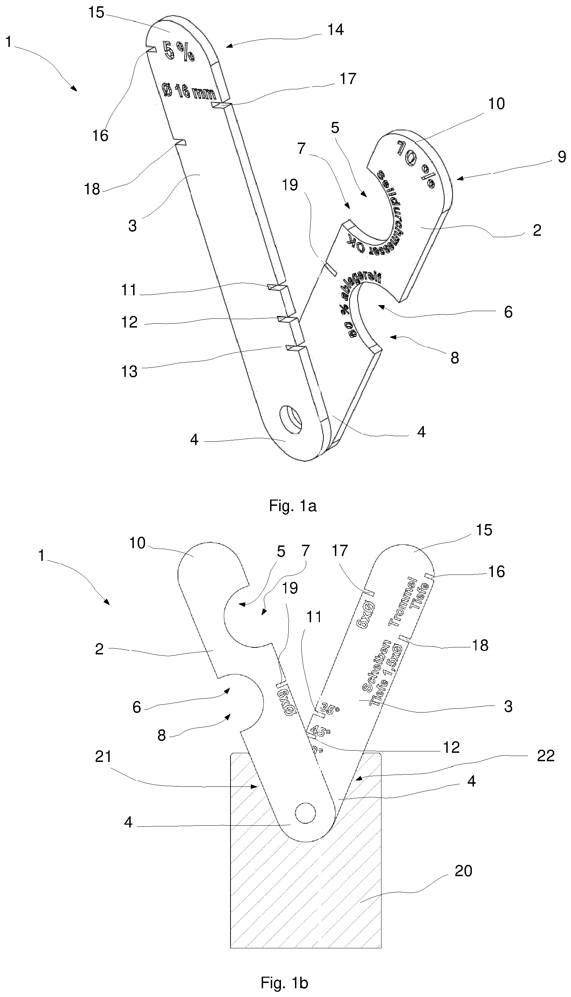

Ein in Fig. 1a in einer perspektivischen Draufsicht auf einer Vorderseite gezeigte Einrichtung 1 zur Bestimmung von Drahtseilparametern eines Drahtseils mit einem nominellen Durchmesser d₀ von 16 mm umfasst zwei längliche Schenkel 2, 3, die an einem ersten Endabschnitt 4 verschwenkbar miteinander verbunden sind.

Ein erster Schenkel 2 umfasst zwei halbkreisförmige Abschnitte 5, 6 aufweisende Ausschnitte 7, 8, die auf gegenüberliegenden Seiten des Schenkels 2 in Längsrichtung voneinander beabstandet in diesen eingebracht sind.

Ein erster halbkreisförmiger Abschnitt 5 ist zur Bestimmung eines Durchmessers eines nicht verschlissenen Drahtseils eingerichtet, während ein zweiter halbkreisförmiger Abschnitt 6 zur Bestimmung eines Durchmessers eines Drahtseils eingerichtet ist, das bereits zu 80 % ablegereif ist ("80% ablegereif"). Der Wert für den Durchmesser des zweiten Ausschnitts ist für dieses Ausführungsbeispiel der Norm DIN ISO 4309 entnommen. Der Durchmesser des ersten halbkreisförmigen Abschnitts 5 entspricht einem maximalen Durchmesser, der um eine Fertigungstoleranz von +4% von dem nominellen Drahtseildurchmesser d₀ abweicht. In diesem Ausführungsbeispiel beträgt der Durchmesser des ersten Abschnitts 5 16,64 mm.

Es versteht sich, dass andere Fertigungstoleranzen, die üblicherweise von einem Drahtseilbenutzer vorgegeben sind, denkbar sind, vorzugsweise solche zwischen 0% bis +5% bezogen auf den nominellen Durchmesser d₀.

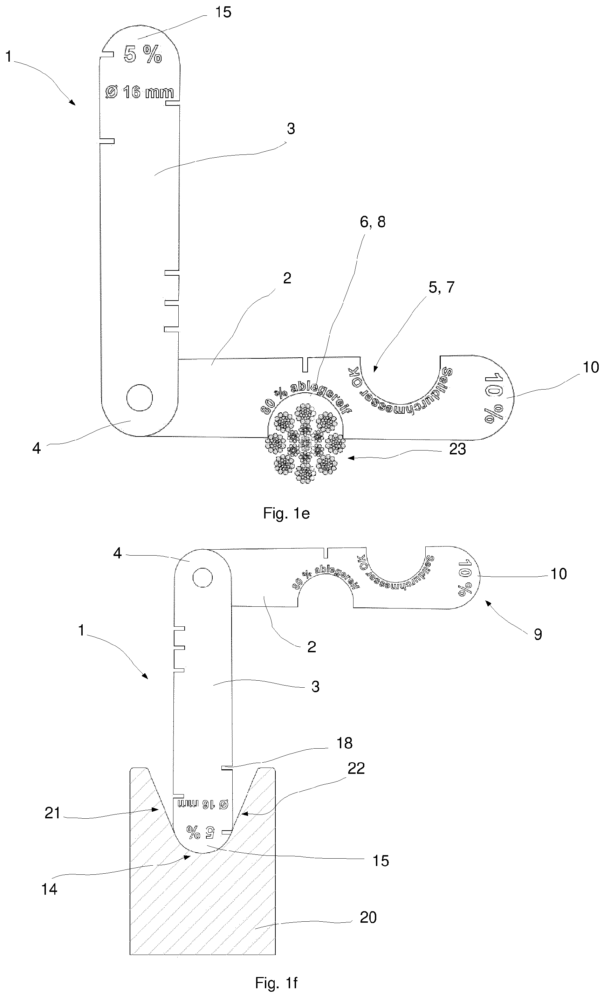

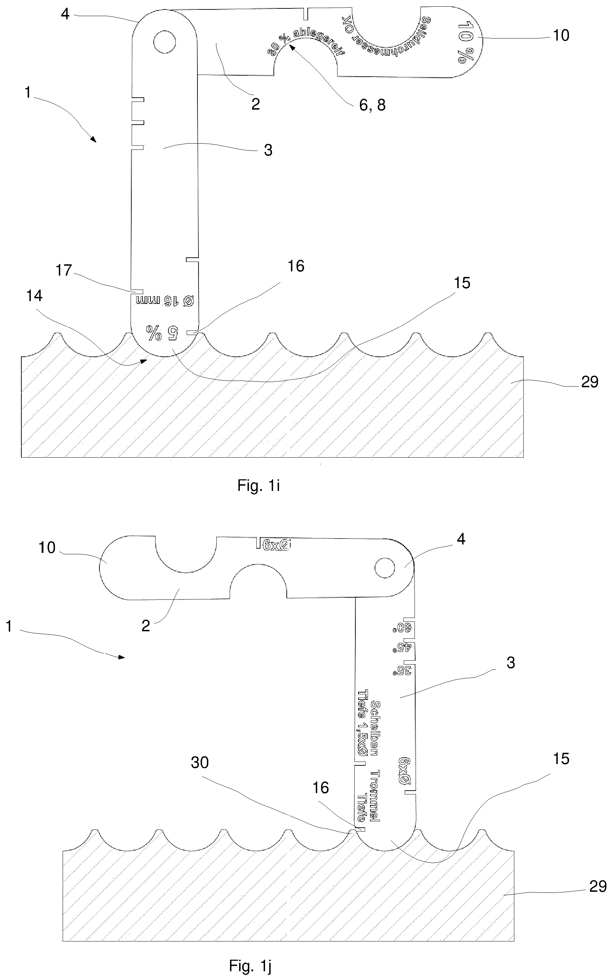

Ein dem ersten Endabschnitt 4 abgewandter zweiter Endabschnitt 9 des ersten Schenkels 2 weist eine halbkreisförmige Rundung 10 auf, die zur Bestimmung eines Rillendurchmessers einer das Drahtseil führenden Seiltrommel (s. Fig. 1i) oder Seilscheibe (s. Fig. 1f-1h) eingerichtet ist.

Ein zweiter Schenkel 3 weist in einem Bereich um den Endabschnitt 4 drei seitliche Einkerbungen 11-13 auf, die zur Bestimmung eines Öffnungswinkels einer Seilscheibe wie in Fig. 1b gezeigt eingerichtet sind.

Ein dem ersten Endabschnitt 4 abgewandter Endabschnitt 14 des zweiten Schenkels 3 weist eine halbkreisförmige Rundung 15 auf, die zur Bestimmung eines Rillendurchmessers einer Seilscheibe oder einer Seiltrommel gemäß Fig. 1f bis 1i eingerichtet ist, wobei der Endabschnitt 14 in diesem Ausführungsbeispiel von dem Endabschnitt 9 verschieden ist.

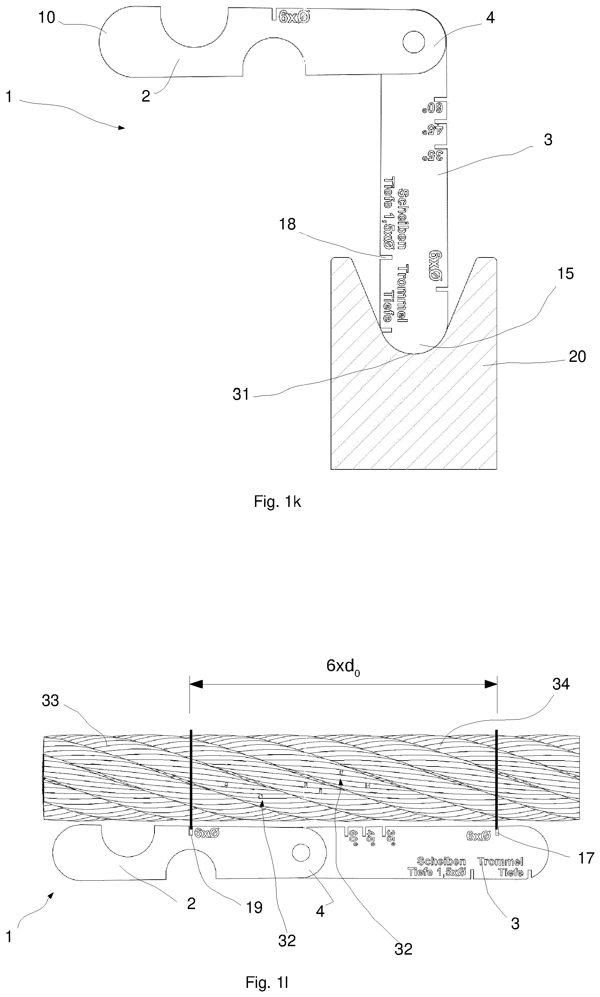

Ferner weist der Endabschnitt 14 drei weitere seitliche Einkerbungen 16-18 auf, von denen die Einkerbungen 16 und 18 zur Bestimmung einer normgerechten Rillentiefen einer Seilscheibe oder einer Seiltrommel gemäß Fig. 1j und 1k geeignet sind.

Die seitliche Einkerbung 17 in dem zweiten Schenkel 3 und eine seitliche Einkerbung 19 in dem ersten Schenkel 2 sind zur Bestimmung einer Referenzlänge an einem Drahtseil vorgesehen, wobei die Referenzlänge dem Sechsfachen des nominellen Drahtseildurchmessers (Erläuterung "6xØ" im Bereich der Einkerbungen 17, 19 in Fig. 1b) entspricht und gemäß Fig. 1l bestimmt wird.

In eine in Fig. 1b in einer geschnittenen Seitenansicht schematisch gezeigte Seilscheibe 20 ist zur Bestimmung eines Seilscheibenöffnungswinkels eine erfindungsgemäße, in einer in Draufsicht auf eine Rückseite gezeigte Einrichtung 1 eingesetzt. Schenkel 2, 3 liegen an gegenüberliegende Seilscheibenflanken 21, 22 an. In diesem Ausführungsbeispiel beträgt ein Öffnungswinkel 45 Grad, was durch den Schenkel 2, der in Draufsicht an die seitliche Einkerbung 12 gemäß Fig. 1b anliegt, angezeigt wird.

In Fig. 1b sind außerdem auf die Schenkel 2, 3 aufgedruckte Erläuterungen zu den jeweiligen Einkerbungen gezeigt. Beispielsweise weist die Erläuterung "Trommel Tiefe" den Benutzer der Einrichtung 1 darauf hin, dass die seitliche Einkerbung 16 zur Bestimmung einer normgerechten Rillentiefe einer Seiltrommel (s. Fig. 1j) vorgesehen ist.

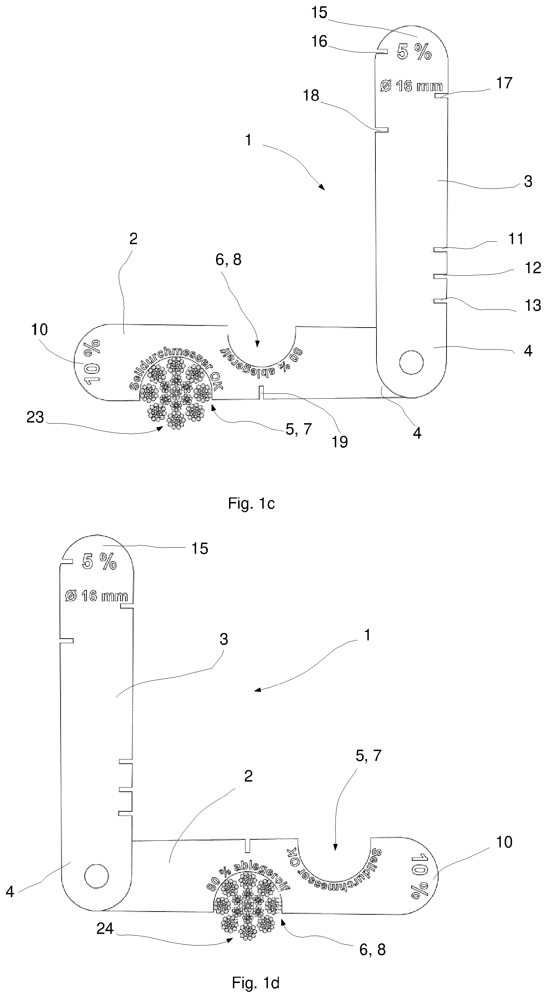

In einer in Fig. 1c in einer geschnittenen Ansicht schematisch gezeigtes Drahtseil 23 ist zur Bestimmung eines Seildurchmessers in den ersten Ausschnitt 7 eingelegt. Dadurch, dass das Drahtseil 23 spaltfrei in den Ausschnitt 7 hineinpasst, ist das Seil nicht verschlissen und ein Drahtseildurchmesser entspricht einem ursprünglichen Drahtseildurchmesser, das heißt demjenigen eines unbenutzten Drahtseils.

Ein in Fig. 1d in einer geschnittenen Ansicht schematisch gezeigtes Drahtseil 24 ist zur Bestimmung eines Verschleißzustandes in den zweiten Ausschnitt 8 des Schenkels 2 eingelegt. Dadurch, dass das Drahtseil 24 spaltfrei in den Ausschnitt 8 hineinpasst, ist das Seil zu 80 % ablegereif. Der Wert für den Durchmesser des halbkreisförmigen Abschnitts 6 des Ausschnitts 8 ist in diesem Ausführungsbeispiel der Norm DIN ISO 4309 entnommen. Durch die auf den Schenkel 2 ausgebrachte Erklärung "80% ablegereif" wird einem Benutzer der Einrichtung 1 unmittelbar angezeigt, dass das Drahtseil 24 zu 80 % ablegereif ist.

Es versteht sich, dass der halbkreisförmige Abschnitt 6 einen anderen Durchmesser aufweisen kann, beispielsweise denjenigen für 20%, 40%, 60% oder 100 % Ablegereife.

Ein in Fig. 1e in einer geschnittenen Ansicht schematisch gezeigtes, nicht verschlissenes Drahtseil 23 passt nicht in den Ausschnitt 8 hinein, wodurch für einen Benutzer der Einrichtung 1 erkennbar ist, dass die in diesem Ausführungsbeispiel gewählte Ablegereife von 80% noch nicht erreicht ist.

Die Bestimmung eines normgerechten Rillendurchmessers einer Seilscheibe ist in Fig. 1f-h erläutert, die Bestimmung eines normgerechten Rillendurchmessers einer Seiltrommel in Fig. 1i.

Die in Fig. 1f in einer Ansicht auf eine Vorderseite gezeigte Einrichtung 1 ist mit dem Endabschnitt 14 zur Bestimmung eines Rillendurchmessers einer in geschnittener Ansicht gezeigten Seilscheibe 20 eingesetzt. In diesem Ausführungsbeispiel weist die Rundung 15 des Endabschnitts 14 des Schenkels 3 einen Durchmesser auf, der dem 1,05-fachen des nominellen Seildurchmessers d₀ entspricht, während die Rundung 10 des Endabschnitts 9 des Schenkels 2 einen Durchmesser aufweist, der dem 1,10-fachen des nominellen Seildurchmessers d₀ entspricht.

Ein in diesem Ausführungsbeispiel normgerechter Rillendurchmesser beträgt mindestens das 1,05-fache des nominellen Durchmessers eines Drahtseils (5 % Abweichung), das in der Seilscheibe geführt wird und maximal das 1,10-fache des nominellen Durchmessers des Drahtseils (10 % Abweichung).

Bei der in Fig. 1f gezeigten Seilscheibe 20 passt die Rundung 15 spaltfrei in die Seilscheibe 20, so dass die Rillendurchmesser der Seilscheibe 20 normgerecht ist.

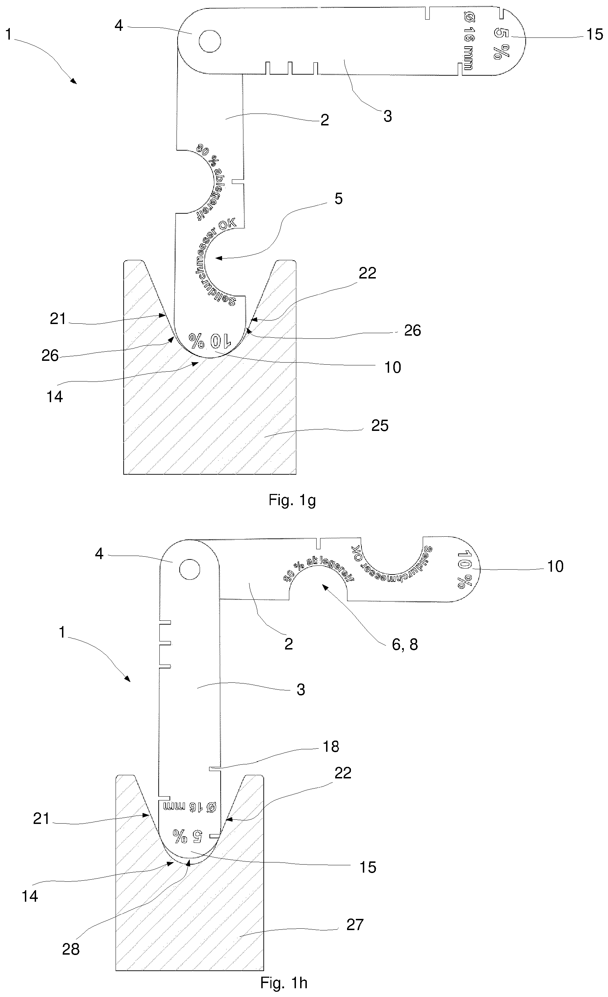

Bei einer in Fig. 1g gezeigten Seilscheibe 25 passt die Rundung 10 zwar in die Seilscheibe hinein, jedoch wird zwischen den Seilscheibenflanken und der Rundung 10 ein Spalt 26 ausgebildet, der einem Benutzer der Einrichtung 1 eine Abweichung von dem maximal normgerechten Rillendurchmesser, das heißt vom 1,10-fachen des nominellen Durchmesser d₀ des Drahtseils, anzeigt. Die in Fig. 1g gezeigte Seilscheibe 25 sollte daher ausgetauscht werden, um einen erhöhten Drahtseilverschleiß zu verhindern.

Bei einer in Fig. 1h gezeigten Seilscheibe 27 passt die Rundung 15 nicht in die Seilscheibe 27 hinein, es wird ein Spalt 28 ausgebildet. Einem Benutzer der Einrichtung 1 wird dadurch angezeigt, dass die Seilscheibe 27 zu klein ist, um ein Drahtseil mit dem für dieses Ausführungsbeispiel gewählten Durchmesser von 16,64 mm verschleißarm zu führen.

Bei der in Fig. 1i gezeigten Seiltrommel 29 liegt die Rundung 15 des Endabschnitts 14 des Schenkels 3 spaltfrei an die Seiltrommel 29 an. Somit ist ein Rillendurchmesser der Seiltromel 29 normgerecht.

Zur Bestimmung einer Rillentiefe (Bezeichnung "Trommel Tiefe" auf dem Schenkel 3) der Seiltrommel 29 ist eine seitliche Einkerbung 16 vorgesehen, die in einer in Fig. 1j gezeigten Position inetwa bündig mit einem Rillenberg 30 abschließt. Läge die Einkerbung 16 vollständig unterhalb des Rillenberges 30, so wäre die Seiltrommel 29 verschlissen und sollte ausgetauscht werden.

Eine Bestimmung einer normgerechten Tiefe ("Scheiben Tiefe 1,5xØ") einer Seilscheibe 20 wird der Endabschnitt 15 in die Seilscheibe 20 eingesetzt. Ist die seitliche Einkerbung 18 in der Stellung wie in Fig. 1k gezeigt, entspricht eine Seilscheibentiefe einer normgerechten Mindesttiefe, wobei der Endabschnitt 15 vorzugsweise vollflächig an eine Seilscheibenrille 31 anliegt.

Normgerecht beträgt die Seilscheibentiefe in diesem Ausführungsbeispiel das 1,5 fache des nominellen Seildurchmessers d₀. Dies zeigt die auf den Schenkel 3 aufgedruckte Erläuterung "1,5xØ".

Eine Bestimmung einer Referenzlänge, die dem sechsfachen nominellen Durchmesser d₀ entspricht und zur Feststellung der Ablegereife eines Seils mittels einer Anzahl an gebrochenen Drähten 32 eines Drahtseils 33 herangezogen werden kann, zeigt Fig. 1l.

Dazu wird die Einrichtung 1 in die in Fig. 1l gezeigte Stellung gebracht, in der Längsachsen der Schenkel 2, 3 koaxial sind. Die Referenzlänge ist die Länge desjenigen Drahtseilabschnitts 34, der sich zwischen den beiden seitlichen Einkerbungen 17 und 19 befindet.

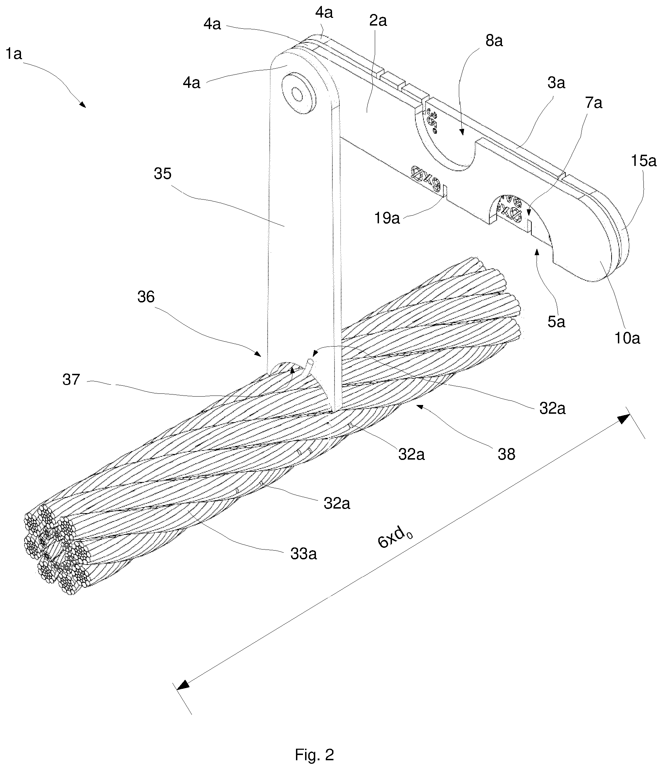

Es wird nun Bezug genommen auf Fig. 2, wo gleiche oder gleichwirkende Teile mit derselben Bezugszahl wie in Fig. 1 bezeichnet sind und der betreffenden Bezugszahl jeweils der Buchstabe a beigefügt ist.

Eine in Fig. 2 gezeigte Einrichtung 1a unterscheidet sich von derjenigen in Fig. 1 gezeigten dadurch, dass ein dritter Schenkel 35 mit einem Endabschnitt 36 vorgesehen ist, der einen halbkreisförmigen Ausschnitt 37 aufweist.

Der Ausschnitt 37 ist zur Anlage an eine Drahtseiloberfläche 38 eines Drahtseils 33a mit einer Referenzlänge, die dem Sechsfachen des nominellen Durchmessers d₀ entspricht, vorgesehen, wobei der Ausschnitt 37 das Drahtseil 33a in Umfangsrichtung vorzugsweise spaltfrei teilweise umgreift.

Wird der Schenkel 35 in Seillängsrichtung bewegt, bleibt er aufgrund von von der Drahtseiloberfläche 37 vorstehenden gebrochenen Drähten 32a hängen. Jedes Hängenbleiben entspricht einem gebrochenen Draht, so dass durch den dritten Schenkel 35 eine Bestimmung einer Anzahl gebrochener Drähte 32a in dem Drahtseil 33a möglich ist. Dadurch ist eine normgerechte Bestimmung der Ablegereife des Drahtseils 33a vorteilhaft möglich.

Es versteht sich, dass die Bestimmung einer Anzahl an gebrochenen Drähten nicht auf die Referenzlänge beschränkt ist. Denkbar ist, dass ein Drahtseil mit mehreren Hundert Metern Länge mit der Einrichtung 1a auf Drahtbrüche untersucht wird.

In den vorgenannten Ausführungsbeispielen sind die Schenkel 2, 3 und 35 aus Stahl gebildet.

Es versteht sich, dass andere Markierungen als seitliche Einkerbungen an den Schenkeln 2, 3 denkbar sind, beispielsweise aufgedruckte Markierungen.

Es versteht sich außerdem, dass eine erfindungsgemäße Einrichtung 1; 1a gemäß anderer Normen als der beispielhaft genannten DIN ISO 4309 ausgebildet sein kann, beispielsweise gemäß der eingangs genannten ASME B30.30 oder der SABS 0294.

## Patentansprüche

1. Einrichtung (1; 1a) zur Bestimmung von Parametern eines Drahtseils (23, 24, 33; 33a) und/oder eines das Drahtseil führenden Drahtseilführungsmittels (20, 25, 27, 29), insbesondere zur Bestimmung von Verschleißparametern und/oder geometrischen Parametern, wobei die Einrichtung (1; 1a) zumindest zwei miteinander verbundene Schenkel (2, 3; 2a, 3a, 35) umfasst, wobei zumindest einer der zumindest zwei Schenkel mindestens zwei kreisbogenförmige Ausschnitte (7, 8; 7a, 8a, 37) aufweist, die zur Bestimmung der Parameter des Drahtseils (23, 24, 33; 33a) eingerichtet sind, wobei der Durchmesser des ersten Ausschnitts (7; 7a) dem nominalen Durchmesser eines nicht verschlissenen Drahtseils entspricht und der Durchmesser des zweiten Ausschnitts (8; 8a) dem Durchmesser eines aus der ISO 4309 (Stand: 11/2017) entnommenen zu einem bestimmten Grad ablegereifen Drahtseils entspricht, wobei jeder kreisbogenförmige Ausschnitt mit einer entsprechenden aufgebrachten Erklärung versehen ist, wodurch ein Rückschluss auf einen Verschleißzustand des Drahtseils möglich ist.

2. Einrichtung nach Anspruch 1,
**dadurch gekennzeichnet,**
**dass** die zumindest zwei Schenkel (2, 3; 2a, 3a, 34) einzeln oder gemeinsam zur Bestimmung der Parameter vorgesehen und verschwenkbar miteinander verbunden sind.

3. Einrichtung nach Anspruch 1 oder 2,
**dadurch gekennzeichnet,**
**dass** die zumindest zwei Schenkel (2, 3; 2a, 3a, 35) jeweils länglich ausgebildet und an einem Endabschnitt (4; 4a) verschwenkbar miteinander verbunden sind.

4. Einrichtung nach einem der Ansprüche 1 bis 3,
**dadurch gekennzeichnet,**
**dass** einer der zumindest zwei Schenkel (2, 3; 2a, 3a, 35) einen Endabschnitt (14) mit einer Markierung (17) aufweist, wobei der Endabschnitt zur Bestimmung einer Tiefe des Drahtseilführungsmittels (20, 25, 27, 29), vorzugsweise zur Bestimmung einer Seilscheibentiefe oder einer Seiltrommeltiefe, eingerichtet ist.

5. Einrichtung nach einem der Ansprüche 1 bis 4,
**dadurch gekennzeichnet,**
**dass** einer der zumindest zwei Schenkel (2, 3; 2a, 3a, 35) einen halbkreisförmigen Endabschnitt (9, 14) aufweist, wobei ein Durchmesser des halbkreisförmigen Endabschnitts einem Rillendurchmesser eines Drahtseilführungsmittels (20, 25, 27, 29) entspricht, wobei der Rillendurchmesser des Drahtseilführungsmittels (20, 25, 27, 29) dem 1,04-fachen bis 1,11-fachen eines nominellen Durchmesser d₀ eines Drahtseils, das über das Drahtseilführungsmittel (20, 25, 27, 29) geführt wird, entspricht.

6. Einrichtung nach einem der Ansprüche 1 bis 5,
**dadurch gekennzeichnet,**
**dass** einer der zumindest zwei Schenkel (2, 3; 2a, 3a, 35) ein mehrere Markierungen (11-13) umfassendes Anzeigemittel aufweist, durch das ein zwischen den beiden Schenkeln gebildeter Winkel, der zur Bestimmung eines Öffnungswinkel des Drahtseilführungsmittels (20, 25, 27) eingerichtet ist, anzeigbar ist.

7. Einrichtung nach einem der Ansprüche 1 bis 6,
**dadurch gekennzeichnet,**
**dass** der mindestens eine Ausschnitt (37) kreisbogenförmig, insbesondere halbkreisförmig, ausgebildet ist, und in einen Endabschnitt (36) eines ersten der zumindest zwei Schenkel eingebracht ist, wobei der Endabschnitt (36) dazu eingerichtet ist, das Drahtseil (23, 24, 33; 33a) während einer Bewegung in einer Drahtseillängsrichtung in Umfangsrichtung zumindest teilweise zu umgreifen.

8. Einrichtung nach einem der Ansprüche 1 bis 6,
**dadurch gekennzeichnet,**
**dass** ein Anzeigemittel vorgesehen ist, das zwei voneinander beabstandete Markierungen (17, 19) umfasst, deren Abstand einem Sechsfachen eines nominellen Durchmessers d₀ des Drahtseils (23, 24, 33; 33a), dessen Parameter zu bestimmen sind, entspricht.

9. Einrichtung nach einem der Ansprüche 1 bis 8,
**dadurch gekennzeichnet,**
**dass** die Einrichtung drei Schenkel (2, 3; 2a, 3a, 35) umfasst.

10. Einrichtung nach einem der Ansprüche 1 bis 9,
**dadurch gekennzeichnet,**
**dass** die zumindest zwei Schenkel (2, 3; 2a, 3a, 35) aus Kunststoff oder Metall gebildet sind.

11. Einrichtung nach einem der Ansprüche 1 bis 10,
**dadurch gekennzeichnet,**
**dass** jeder der zumindest zwei Schenkel (2, 3; 2a, 3a, 35) zur Bestimmung von mehreren verschiedenen Parametern des Drahtseils (23, 24, 33; 33a) und/oder des das Drahtseil führenden Drahtseilführungsmittels (20, 25, 27, 29) eingerichtet ist.

## Claims

1. Device (1; 1a) for determining parameters of a wire rope (23, 24, 33; 33a) and/or a wire rope guide means (20, 25, 27, 29) guiding the wire rope, in particular for determining wear parameters and/or geometric parameters, wherein the device (1; 1a) comprises at least two legs (2, 3; 2a, 3a, 35) connected to one another, wherein at least one of the at least two legs has at least two circular arc-shaped cutouts (7, 8; 7a, 8a, 37) which are configured to determine the parameters of the wire rope (23, 24, 33; 33a), wherein the diameter of the first cutout (7; 7a) corresponds to the nominal diameter of an unworn wire rope and the diameter of the second cutout (8; 8a) corresponds to the diameter of a wire rope taken from ISO 4309 (as of 11/2017) which is ready for discard to a certain degree, wherein each circular arc-shaped cutout is provided with a corresponding indicia applied thereto, whereby a conclusion about a wear condition of the wire rope is possible.

2. Device according to claim 1,
**characterized in that**
the at least two legs (2, 3; 2a, 3a, 34) are provided individually or jointly for determining the parameters and are pivotally connected to one another.

3. Device according to claim 1 or 2,
**characterized in that**
the at least two legs (2, 3; 2a, 3a, 35) are each formed elongated and are pivotally connected to one another at an end portion (4; 4a).

4. Device according to any one of claims 1 to 3,
**characterized in that**
one of the at least two legs (2, 3; 2a, 3a, 35) has an end portion (14) with a marking (17), wherein the end portion is configured to determine a depth of the wire rope guide means (20, 25, 27, 29), preferably for determining a rope sheave depth or a rope drum depth.

5. Device according to any one of claims 1 to 4,
**characterized in that**
one of the at least two legs (2, 3; 2a, 3a, 35) has a semicircular end portion (9, 14), wherein a diameter of the semicircular end portion corresponds to a groove diameter of a wire rope guide means (20, 25, 27, 29), wherein the groove diameter of the wire rope guide means (20, 25, 27, 29) corresponds to 1.04 times to 1.11 times a nominal diameter d₀ of a wire rope which is guided over the wire rope guide means (20, 25, 27, 29).

6. Device according to any one of claims 1 to 5,
**characterized in that**
one of the at least two legs (2, 3; 2a, 3a, 35) has an indicating means comprising several markings (11-13), by means of which an angle formed between the two legs, which is configured to determine an opening angle of the wire rope guide means (20, 25, 27), can be displayed.

7. Device according to any one of claims 1 to 6,
**characterized in that**
the at least one cutout (37) is formed circular arc-shaped, in particular semicircular, and is formed in an end portion (36) of a first one of the at least two legs, wherein the end portion (36) is configured to at least partially engage around the wire rope (23, 24, 33; 33a) in the circumferential direction during a movement in a wire rope longitudinal direction.

8. Device according to any one of claims 1 to 6,
**characterized in that**
an indicating means is provided which comprises two markings (17, 19) spaced apart from one another, the distance of which corresponds to six times a nominal diameter d₀ of the wire rope (23, 24, 33; 33a) whose parameters are to be determined.

9. Device according to any one of claims 1 to 8,
**characterized in that**
the device comprises three legs (2, 3; 2a, 3a, 35).

10. Device according to any one of claims 1 to 9,
**characterized in that**
the at least two legs (2, 3; 2a, 3a, 35) are formed of plastic or metal.

11. Device according to any one of claims 1 to 10,
**characterized in that**
each of the at least two legs (2, 3; 2a, 3a, 35) is configured to determine several different parameters of the wire rope (23, 24, 33; 33a) and/or of the wire rope guide means (20, 25, 27, 29) guiding the wire rope.

## Revendications

1. Dispositif (1 ; 1a) pour déterminer des paramètres d'un câble métallique (23, 24, 33 ; 33a) et/ou d'un moyen de guidage de câble métallique (20, 25, 27, 29) guidant le câble métallique, en particulier pour déterminer des paramètres d'usure et/ou des paramètres géométriques, le dispositif (1 ; 1a) comprenant au moins deux branches (2, 3 ; 2a, 3a, 35) reliées l'une à l'autre, au moins l'une des au moins deux branches présentant au moins deux découpes (7, 8 ; 7a, 8a, 37) en forme d'arc de cercle qui sont conçues pour déterminer les paramètres du câble métallique (23, 24, 33 ; 33a), le diamètre de la première découpe (7 ; 7a) correspondant au diamètre nominal d'un câble métallique non usé et le diamètre de la deuxième découpe (8 ; 8a) correspondant au diamètre d'un câble métallique extrait de l'ISO 4309 (état : 11/2017) qui est à mettre au rebut à un certain degré, chaque découpe en forme d'arc de cercle étant pourvue d'une indication apposée correspondante, ce qui permet de tirer une conclusion sur un état d'usure du câble métallique.

2. Dispositif selon la revendication 1,
**caractérisé en ce que**
les au moins deux branches (2, 3 ; 2a, 3a, 34) sont prévues individuellement ou conjointement pour déterminer les paramètres et sont reliées l'une à l'autre de manière pivotante.

3. Dispositif selon la revendication 1 ou 2,
**caractérisé en ce que**
les au moins deux branches (2, 3 ; 2a, 3a, 35) présentent chacune une forme allongée et sont reliées l'une à l'autre de manière pivotante au niveau d'une section d'extrémité (4 ; 4a).

4. Dispositif selon l'une quelconque des revendications 1 à 3,
**caractérisé en ce que**
l'une des au moins deux branches (2, 3 ; 2a, 3a, 35) présente une section d'extrémité (14) avec un marquage (17), la section d'extrémité étant conçue pour déterminer une profondeur du moyen de guidage de câble métallique (20, 25, 27, 29), de préférence pour déterminer une profondeur de poulie de câble ou une profondeur de tambour de câble.

5. Dispositif selon l'une quelconque des revendications 1 à 4,
**caractérisé en ce que**
l'une des au moins deux branches (2, 3 ; 2a, 3a, 35) présente une section d'extrémité se-mi-circulaire (9, 14), un diamètre de la section d'extrémité semi-circulaire correspondant à un diamètre de gorge d'un moyen de guidage de câble métallique (20, 25, 27, 29), le diamètre de gorge du moyen de guidage de câble métallique (20, 25, 27, 29) correspondant à 1,04 fois à 1,11 fois un diamètre nominal d₀ d'un câble métallique qui est guidé sur le moyen de guidage de câble métallique (20, 25, 27, 29).

6. Dispositif selon l'une quelconque des revendications 1 à 5,
**caractérisé en ce que**
l'une des au moins deux branches (2, 3 ; 2a, 3a, 35) présente un moyen d'indication comprenant plusieurs marquages (11-13), au moyen duquel un angle formé entre les deux branches, qui est conçu pour déterminer un angle d'ouverture du moyen de guidage de câble métallique (20, 25, 27), peut être indiqué.

7. Dispositif selon l'une quelconque des revendications 1 à 6,
**caractérisé en ce que**
la au moins une découpe (37) est en forme d'arc de cercle, en particulier semi-circulaire, et est ménagée dans une section d'extrémité (36) d'une première des au moins deux branches, la section d'extrémité (36) étant conçue pour entourer au moins partiellement le câble métallique (23, 24, 33 ; 33a) dans la direction circonférentielle pendant un mouvement dans une direction longitudinale du câble métallique.

8. Dispositif selon l'une quelconque des revendications 1 à 6,
**caractérisé en ce qu'**
un moyen d'indication est prévu qui comprend deux marquages (17, 19) espacés l'un de l'autre, dont la distance correspond à six fois un diamètre nominal d₀ du câble métallique (23, 24, 33 ; 33a) dont les paramètres doivent être déterminés.

9. Dispositif selon l'une quelconque des revendications 1 à 8,
**caractérisé en ce que**
le dispositif comprend trois branches (2, 3 ; 2a, 3a, 35).

10. Dispositif selon l'une quelconque des revendications 1 à 9,
**caractérisé en ce que**
les au moins deux branches (2, 3 ; 2a, 3a, 35) sont formées en matière plastique ou en métal.

11. Dispositif selon l'une quelconque des revendications 1 à 10,
**caractérisé en ce que**
chacune des au moins deux branches (2, 3 ; 2a, 3a, 35) est conçue pour déterminer plusieurs paramètres différents du câble métallique (23, 24, 33 ; 33a) et/ou du moyen de guidage de câble métallique (20, 25, 27, 29) guidant le câble métallique.
